# EUROPEAN PATENT SPECIFICATION

(11) **EP 2 306 155 B1**
(45) Date of publication and mention of the grant of the patent: **09.01.2013**
(21) Application number: 10172189.2
(22) Date of filing: 06.08.2010
(51) Int. Cl.: G01C 21/36, G06F 3/048

(54) **Navigation device with multitouch icon selection**
Navigationsvorrichtung mit Multitouch-Icon-Selektion
Dispositif de navigation avec selection d'icone par tactiles multiples

(30) Priority: 30.09.2009 JP 2009226198; 31.03.2010 JP 2010084515
(43) Date of publication of application: 06.04.2011
(73) Proprietor: AISIN AW CO., LTD., Anjo-shi, Aichi-ken 444-1192 (JP)
(72) Inventor: Ogawa, Tsuyoshi, ANJO-SHI, AICHI-KEN 444-1192 (JP); Yamazaki, Kiyonobu, ANJO-SHI, AICHI-KEN 444-1192 (JP)
(74) Representative: Intès, Didier Gérard André

(56) References cited:
- EP-A2- 1 840 718
- US-A1- 2002 177 944
- US-A1- 2007 146 342
- US-A1- 2008 168 403

## Description

### BACKGROUND OF THE INVENTION

### Field of the Invention

The present invention relates to a navigation device that displays an icon such as a mark on a map displayed on a screen. For example, the present invention relates to a navigation device that is capable of setting a specific position as a destination or a waypoint by the icon.

### Description of the Related Art

In conventional navigation devices, a host position and a movement speed are calculated in real time by using a GPS (Global Positioning System) satellite. The navigation devices of this kind are common for mobile objects such as an automobile and portable devices.

Such navigation devices display the map on the screen based on computerized map data, and indicate the host position on the map. Further, such navigation devices include a function that provides guidance for driving based on a route that was set by an operator of the navigation devices specifying a departure point, a destination, a waypoint, and the like.

As the navigation devices of this kind, a technology of Japanese Patent Application; Publication No. JP-A-2002-328028 is publicly known.

Japanese Patent Application; Publication No. JP-A-2002-328028 discloses a technology that, when an input function button and an arbitrary coordinate on the map were designated, generates and displays a mark associated with the input function button at a position on the map corresponding to the designated coordinate. Specifically, input function buttons associated with specific processing are displayed together with the map on a display part, and when an input function button and an arbitrary coordinate on the map were designated on a touch panel, a mark is generated and displayed at the position on the map corresponding to the coordinate. The mark here represents for example a favorite point, a destination, and a waypoint.

In addition, after the mark was generated, when the coordinate corresponding to the mark displayed on the map were designated, information (an object) relating to the mark is displayed.

The information relating to the mark is guide information such as business hour, non-business day, an address, a telephone number, a picture (an image) introducing the place, and the like if the place of the mark is a facility or a store. Such information is previously associated with the place and stored in a predetermined data storage part, a recording disk, or the like.

### SUMMARY OF THE INVENTION

According to the technology of Japanese Patent Application; Publication No. JP-A-2002-328028, the input function buttons for the departure point, the destination, the waypoint, a deletion, and the like, to be selected by the operator of the navigation device are displayed on the screen, and when moving a finger or a pen while touching the touch panel, an arbitrary coordinate is designated on the fixed map and setting of the departure point, the destination, the waypoint, and deleting these points, and the like can be performed on the navigation device.

However, in the abovementioned technology, if the finger or the pen unintentionally gets off the touch panel while moving the input function button to the coordinate targeted by the operator, the coordinate at that point is designated. For example, if the input function button is for the destination, a problem that route search is executed using the coordinate of the point where the finger or the pen has got off the touch panel as the destination, occurs.

It is an object of the present invention to provide a navigation device, in which, when the operator selects an icon and moves the selected icon to a target position, even if the selection of the icon is unintentionally cancelled while moving the icon, the icon is not settled at the position where the selection was cancelled and the operator can move the icon to the target position immediately.

A navigation device according to a first aspect of the invention comprises: a display unit that displays a map and an icon; an icon selection unit that enables a displayed icon to be selected and moved to an arbitrary position on the map; an icon position settlement unit that settles a position of the icon thus moved; and a control unit that executes a function associated with the icon based on the position of the icon thus settled, wherein the icon is selected by touching two points on the display unit; the icon selection unit selects the icon if it is located within a predetermined area midpoint between the two points touched on the display unit, and the icon position settlement unit settles the position of the icon if the two points selecting the icon have been rotated around the position of the icon.

According to the navigation device in a second aspect of the invention, in the navigation device according to the first aspect of the invention, the icon position settlement unit determines that the two points selecting the icon have been rotated if the two points selecting the icon are located on opposite sides with respect to the position of the icon and the respective points have been moved in opposite directions around the position of the icon.

According to the navigation device in a third aspect of the invention, in the navigation device according to the first or second aspect of the invention, the icon is associated with two functions corresponding to rotating directions of the two points selecting the icon, and the control unit, when executing the function of the icon, executes the function corresponding to the rotating direction of the two points selecting the icon.

According to the navigation device in a fourth aspect of the invention, in the navigation device according to the third aspect of the invention, the icon is associated with the function for designating a route search condition and performing route search using the position of the icon as a destination, and the control unit, when executing the route search to the settled position of the icon, sets the route search condition according to the rotating direction of the two points selecting the icon and executes the route search.

According to the navigation device in a fifth aspect of the invention, in the navigation device according to the first or second aspect of the invention, the icon is associated with a plurality of functions corresponding to rotating angles of the two points selecting the icon, and the control unit, when executing the function of the icon, executes the function corresponding to the rotating angle of the two points selecting the icon.

According to the navigation device in a sixth aspect of the invention, in the navigation according to the fifth aspect of the invention, the icon selection unit displays information of a plurality of functions associated with the icon: and in the vicinity of the selected icon, if one of the two points selecting an icon is located at a location where information over a desired function among said plurality of functions is displayed when a touch of the two points selecting the icon stops, the control unit executes the desired function.

According to the navigation device in a seventh aspect of the invention, in the navigation device according to the sixth aspect of the invention, when one of the two points selecting the icon is located at a location where information over a considered function among said plurality of functions is displayed, the icon selection unit displays over the icon the information of the considered function.

In the navigation device according to the present invention, the icon is selected by touching two points on the screen in a manner such that the icon is pinched. If the touch of the two points on the screen was unintentionally cancelled while moving the icon to an arbitrary position, the icon is not settled at the position where the touch was cancelled or stopped. Therefore, mis-settlement of the icon can be prevented. Also, as the icon can be immediately re-selected, it becomes possible to quickly move the icon to the desired position and settle the icon at such position.

In addition, the detection can be realized with a relatively-inexpensive sensor because only the movement of the touched two points are necessary to be detected. Therefore, cost reduction is possible.

### BRIEF DESCRIPTION OF THE DRAWINGS

FIG. 1 is a block diagram showing an overall structure including a part of function expression of a navigation device according to an embodiment of the present invention.

FIG. 2 is an explanatory drawing of a screen of the navigation device according to the embodiment of the present invention.

FIGS. 3A, 3B, 3C, and 3D are explanatory drawings relating so destination setting of the navigation device according to the embodiment of the present invention.

FIG. 4 is a flowchart of a "destination setting routine" of the navigation device according to the embodiment of the present invention.

FIG. 5 is an explanatory drawing according to other embodiments of the navigation device.

FIG. 6 shows an example of the destination setting of the navigation device according to other embodiments of the navigation device.

FIG. 7 explains a change method of a passing order of a destination of FIG. 6.

### DETAILED DESCRIPTION OF THE PREFERRED EMBODIMENT

The present invention is described in further detail below with reference to embodiments in conjunction with the accompanying drawings. In the embodiments, the same symbols and signs in the drawings refer to the same or corresponding function parts; therefore, overlapped explanation is omitted.

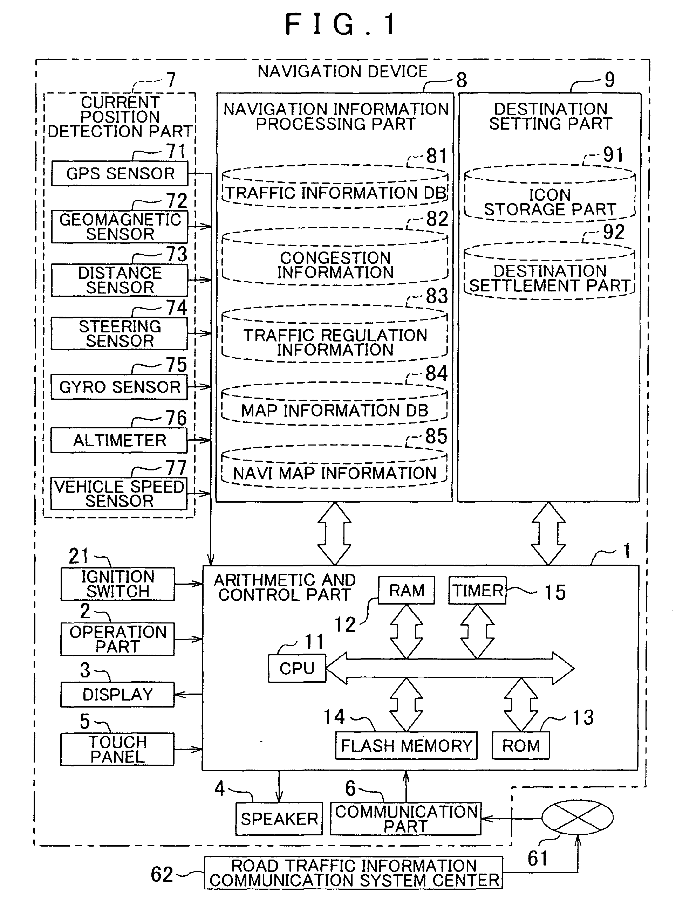

First, the embodiments of the present invention are described in conjunction with FIGS. 1 to 7.

FIG. 1 is a block diagram showing an overall structure including a part of function expression of a navigation device according to the embodiment of the present invention.

In FIG. 1, the navigation device according to the present embodiment includes an arithmetic and control part 1, an operation part 2, a display 3, a speaker 4, a current position detection part 7, a communication part 6, a navigation information processing part 8, a destination setting part 9, and the like. The arithmetic and control part 1 is configured with a microprocessor that performs various kinds of arithmetic processing based on input information. The operation part 2 includes various keys including an ignition switch 21 that accepts operation from a operator to drive an engine, a microphone for an audio input, a touch switch, and the like. The display 3 includes a liquid crystal, EL, and the like that display to the operator operation information and information of a map and the like. The speaker 4 performs audio guidance regarding route guidance and guidance of traffic regulation information and congestion information. The current position detection part 7, which detects a current position of a vehicle, includes various sensors so as to be able to detect the current position of the vehicle, a direction, a distance to an object (for example, an intersection), and the like. The communication part 6 performs communication with an information center such as a VICS (a registered trademark: vehicle Information and Communication System) center 62 via a network 61. The navigation information processing part 8, in which various kinds of data is stored, includes a hard disk with a large storage capacity that is capable of writing and reading. The destination setting part 9 searches for a route upon setting a destination by a navigation function. In addition, the display 3 may serve as a touch switch as the operation part 2.

The arithmetic and control part 1 configured with the microprocessor includes; a CPU 11 that performs computing for an overall control and control; internal storage devices such as a RAM 12, a ROM 13, and a flash memory 14; a timer 15; and the like. The RAM 12 is used as a working memory when the CPU 11 performs various computing processing and also stores route data when a route has been searched, a link ID having the traffic regulation information, and the like. The ROM 13 stores a control program and a route change guidance processing program that provides a user with guidance for changing to a congestion-avoided route. The flash memory 14 stores a program read from the ROM 13. A semiconductor memory, a magnetic core, and the like are utilized as the RAM 12, the ROM 13, the flash memory 14, and the like. A unit having a computing function such as a MPU can be utilized as the CPU 11 that performs computing and control.

The ROM 13 stores various programs, and the RAM 12 stores various data. The programs, the data, and the like are read from an external storage device, a memory card, and the like and written in the flash memory 14. Further, the programs, the data, and the like can be updated by changing the memory card and the like.

The current position detection part 7, which detects the current position of the vehicle, includes a GPS sensor 71, a geomagnetic sensor 72, a distance sensor 73, a steering sensor 74, a gyro sensor 75 as a direction detection part, an altimeter 76, and a vehicle speed sensor 77 that detects a travel speed and a travel distance of the vehicle, and the like.

The navigation device according to the present embodiment is capable of receiving, at intervals of a predetermined time, road traffic information such as the traffic regulation information, and information relating to congestion of a road and the like, which were created by collecting information of a road traffic control system of the police, the Japan Highway Public Corporation, or the like from the road traffic information communication system center 62 via the network 61. The road traffic information is for example detailed information relating to the road traffic information such as road congestion information regarding a congestion of a road and the road regulation information due to road construction, building work, or the like. The detailed information includes, for the road congestion information, an after-mentioned VICS link ID, an actual length of the congestion, an expected time when the congestion is solved, and the like, and for the traffic regulation information, the after-mentioned VICS link ID, duration of road construction, building work, and the like, types of traffic regulation such as a closed road, alternately-closed one-way traffic, lane regulation, a period of time of the traffic regulation, and the like.

In addition, as the network 61, a communication system such as a wireless LAN (Local Area Network), a WAN (Wide Area Network), an intranet, a cellular phone network, a telephone network, a public communication network, a private communication network, a communication network such as Internet, and the like can be utilized for example. In addition, a communication system using CS broadcasting, BS broadcasting, digital terrestrial broadcasting, FM multiplex broadcasting, and the like can be utilized. Further, a communication system such as an electronic toll collection system (ETC) used in an intelligent transportation system (ITS), a dedicated short range communication system (DSRC), and the like also can be utilized.

The respective elements forming the navigation device according to the present embodiment are explained in detail with reference to FIG. 1.

The GPS sensor 71 receives radio waves generated by an artificial satellite to detect the current position of the vehicle on the earth and the current time. The geomagnetic sensor 72 measures geomagnetism to detect a direction of the vehicle. The distance sensor 73 detects a distance between predetermined positions on a road, and the like. For example, the distance sensor 73 here measures a rotation speed of a wheel of the vehicle and detects the distance based on the measured rotation speed. However, the distance may be detected by integrating output of the vehicle speed sensor 77.

The steering sensor 74 detects a steering angle of the vehicle. Here, as the steering sensor 74, an optical rotation sensor mounted on a rotating part of a steering wheel, a rotational resistance sensor, an angle sensor mounted on a wheel, or the like is used for example.

The gyro sensor 75 detects a turn angle of the vehicle. Here, as the gyro sensor 75, a gas rate gyro, a vibration gyro, or the like is used for example. In addition, by integrating the turn angle detected by the gyro sensor 75, the direction of the vehicle can be detected.

In the present embodiment, the navigation information processing part 8 and the destination setting part 9 are described for a case of using a hard disk. In the present embodiment, a hard disk is used as the navigation information processing part 8 and the destination setting part 9. However, in addition to the hard disk, a magnetic disk such as a flexible disc or the like can be used as a part of the external storage device. Further, the memory card, a magnetic tape, a magnetic drum, a CD, a MD, a DVD, an optical disk, an IC card, and the like can be used as a part of the external storage device.

The arithmetic and control part 1 is electrically connected to the respective peripheral devices of the operation part 2, the display 3, the speaker 4, a touch panel 5, and the communication part 6. The operation part 2 is operated when changing the current position at the time of starting travel and inputting a departure point as a guidance start point and a destination as a guidance end point, or when performing search for information relating to a facility, and includes a plurality of operation switches such as various keys. The arithmetic and control part 1 performs control to execute various operations according to a switch signal outputted by the operation on each switch of the operation part 2. The ignition switch 21 performs start and stop of an engine.

As the operation part 2, a keyboard, a mouse, a bar-code reader, a remote control device for remote operation, a joystick, a light pen, a stylus pen, and the like can be also utilized. In addition, the operation part 2 can be configured with the touch panel 5 installed in front of the display 3.

On a screen 32 of the display 3, operation guidance, a operation menu, key guidance, a map, various types of icons, a searched route from the current position to the destination, guidance information along the searched route, a route change guidance information described later, traffic information, news, weather forecast, time, E-mail, TV programs, and the like are displayed.

In place of the display 3, a CRT display, a plasma display, EL, or the like can be utilized. Also, a hologram device that project hologram on a front glass af a vehicle can be utilized.

The speaker 4 outputs audio guidance for traveling along the searched route and for a change of the searched route based on an instruction from the arithmetic and control part 1. The audio guidance to be provided here includes for example "200 ahead, to the right direction at XX intersection.", "The route was changed to a route using toll roads.", and the like. Especially, in the present embodiment, messages for operation order and the like are outputted.

As the audio outputted by the sneaker 4, various types of sound effect and various guidance information previously-recorded in an IC memory or the like can be outputted in addition to a synthesized sound.

Further, the communication part 6 is a beacon receiver that receives, as a radio wave beacon, an optical beacon, and the like via a radio wave beacon device, an optical beacon device, and the like, the road traffic information including various information such as the congestion information, the traffic regulation information, parking lot information, traffic accident information, congestion status of service areas, which were sent from an information center such as the road traffic information communication system center 62 or the like. The radio wave beacon device and the optical beacon device are installed along a road. In addition, the communication part 6 is a network device that realizes communication on the communication system such as the LAN (Local Area Network), the WAN (Wide Area Network), the intranet, the cellular phone network, the telephone network, the public communication network, the private communication network, the communication network such as the Internet, and the like as the network 61. Further, the communication part 6 includes a FM receiver that receives, as the FM multiplex broadcasting via a FM broadcasting station, FM multiplex information including information of news, weather forecast, and the like, besides the information from the road traffic information communication system center 62. The beacon receiver and the FM receiver are unitized and installed as a VICS receiver; however, these can be separately installed.

A traffic information DB 81 of the navigation information processing part 8 stores congestion information 82 created from the road traffic information relating to the current congestion of the road including an actual length of the congestion, the expected time when the congestion is solved, and the like, which was received from the road traffic information communication system center 62. In addition, the traffic information DB 81 stores traffic regulation information 83 created from the road traffic information relating to the road regulation information due to the road construction, the building work, or the like including traffic regulation, which was received from the road traffic information communication system center 62.

The road traffic information received from the road traffic information communication system center 62 includes the VICS link ID together with type information, information of a position, a distance of a congested section, a congestion level, and the like. The VICS link ID is an identification number assigned to a VICS link as a travel guidance link, which is standardized by dividing a road at every predetermined intersection. In addition, the road traffic information includes information of coordinates of a start point and an end point of each VICS link and the distance from the start point and the end point, and the like.

The road stored in a map information DB 84 and the VICS link are not the same. That is, the road (the link) is generally divided shorter than the VICS link. The traffic information DB 81 includes a conversion table between a link ID assigned as an identification number to each road and the VICS link ID, thereby a corresponding link ID can be determined based on the VICS link ID. Therefore, when receiving the VICS link ID from the road traffic information communication system center 62, the navigation device according to the present embodiment can determine, based on the VICS link ID, the section of the road, for which the road traffic information such as the congestion information and the like should be displayed. The VICS link ID of the road traffic information relating to the current congestion of the road and the like received from the road traffic information communication system center 62 is converted into the link ID and stored as the congestion information 82. Also, the VICS link ID of the road traffic information relating to the traffic regulation information 83 and the like received from the road traffic information communication system center 62 is converted into the link ID and stored as the traffic regulation information 83.

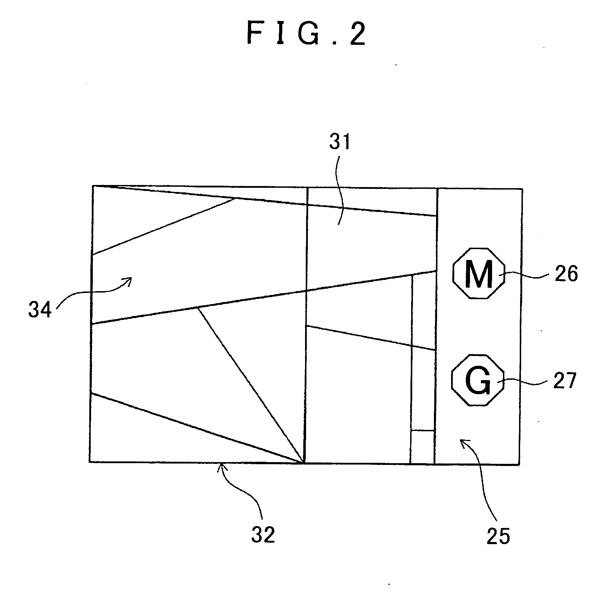

In addition, the map information DB 84 stores navi map information 85 that is used in travel guidance and route search in the navigation device according to the present embodiment. The navi map information 85 includes various information necessary for route guidance and map display, for example, newly-created road information for determining newly-created roads, map display data for displaying a map 31 (see FIG. 2), intersection data relating to each intersection, node data relating to a node point, link data relating to a road as a kind of facility, route search data for searching far a route, shop data relating to a POI (Point of Interest) such as a shop as a kind of the facility, and the like, search data for searching for a point, and the like. Contents of the map information DB 84 are updated by downloading update information delivered via the communication part 6 from a map information delivery center.

The destination setting part 9 includes an icon storage part 91 and a destination settlement part 92. The icon storage part 91 is a memory area to store icons used by the operator. In the present embodiment, among various types of icons, a memory point icon 26 and a destination icon 27 (see FIG. 2) are stored. The memory point icons 26 and the destination icon 27 are displayed in an icon area 25 on the screen 32 of the display 3 (see FIG. 2).

When the icon selected by the operator is moved to a certain position on the map 31, the destination settlement part 92 settles the position where the icon is moved as a memory point if the icon 26 is settled, and the destination settlement part 92 settles the position where the icon is moved as the position of the destination if the icon 27 is settled.

Next, the control of the navigation device according to the present embodiment, which is processed by the arithmetic and control part 1, is described with reference to screen display of the display 3.

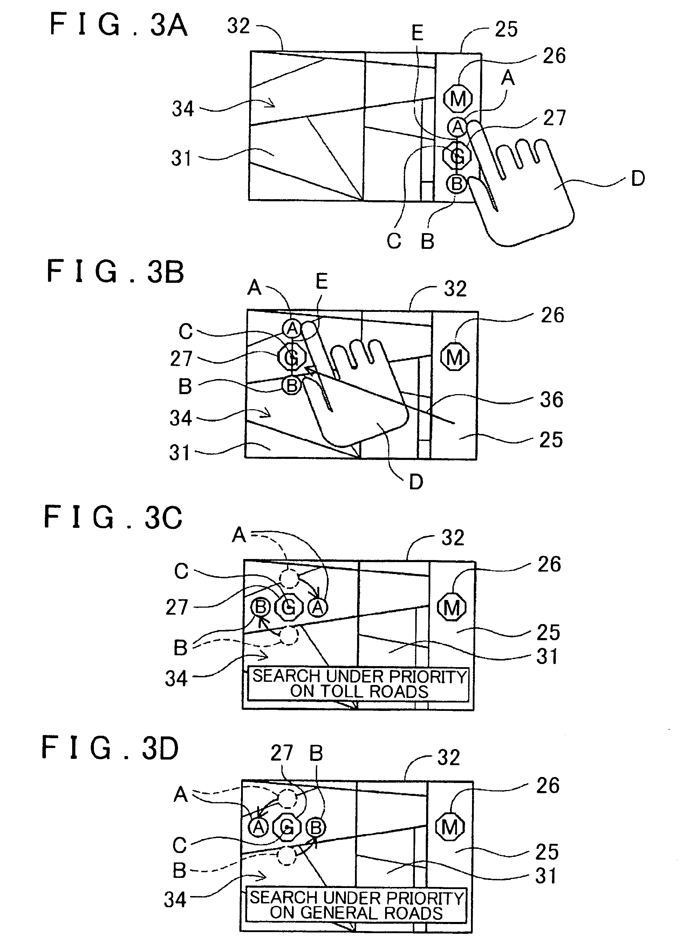

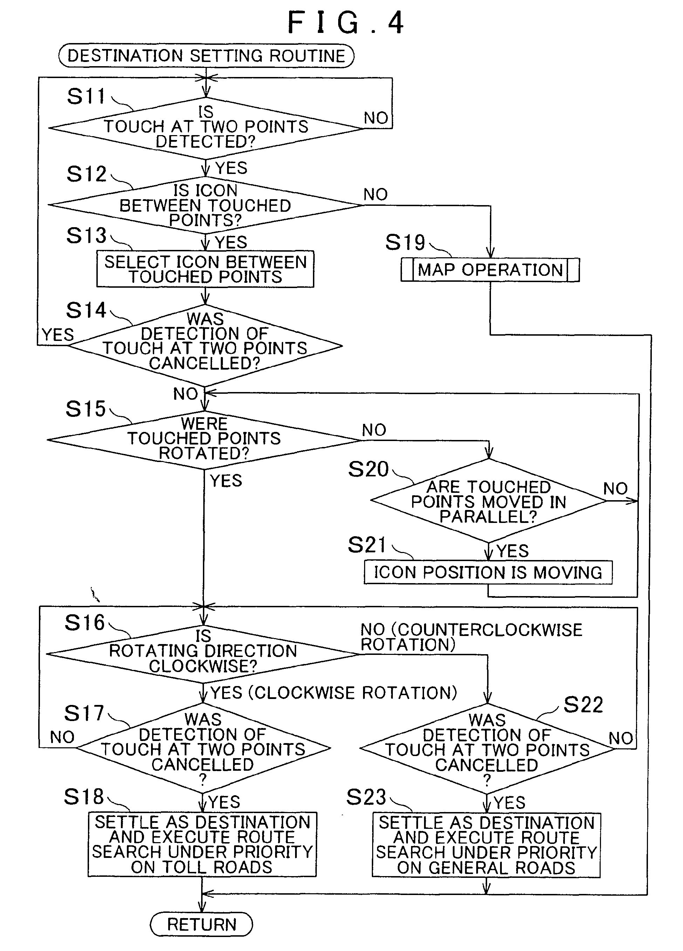

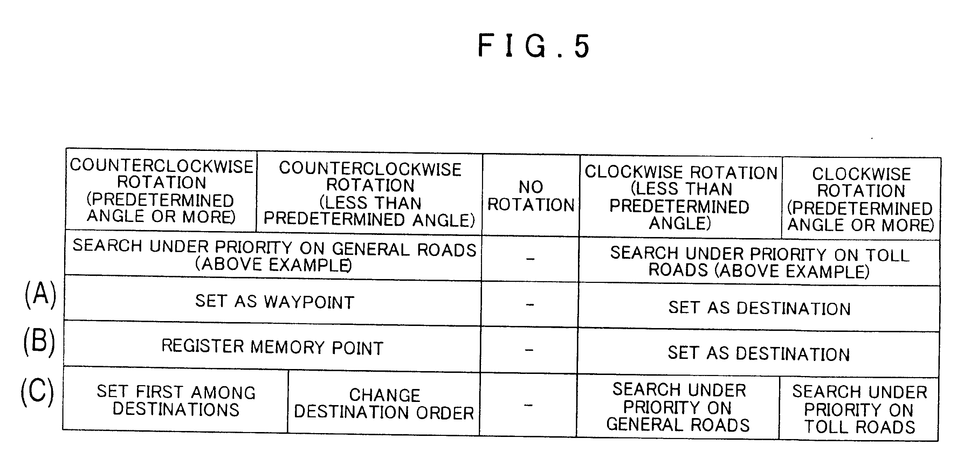

FIG. 2 is an explanatory drawing of a screen of the navigation device according to the embodiment of the present invention. FIGS. 3A, 3B, 3C, and 3D are explanatory drawings relating to destination setting of the navigation device according to the present embodiment. FIG. 4 is a flowchart of a "destination setting routine" of the navigation device according to the present embodiment. FIG. 5 is an explanatory drawing according to other embodiments of the navigation device.

As shown in FIG. 2, the map 31 and a plurality of icons 26 and 27 are displayed on the screen 32 of the display 3 by execution of a main problem (not shown). The screen 32 includes a map display part 34 for displaying the map 31 at the center of the screen and the icon area 25, where various types of icons are allocated, at the right side of the map display part 34. In the icon area 25, from the top, the memory point icon 26 and the destination icon 27 are allocated. Here, when a program of the after-mentioned "destination setting routine" is executed, the destination icon 27 is settled at the certain position on the map 31 and the route search is executed.

Here, functions are assigned to the respective icons displayed in the icon area 25. When the user selects and moves these icons on the screen, the assigned functions are executed with the positions after the movement. For example, the memory point icon 26 is associated with a function to register the position after the movement as the memory point, and the position registered as the memory point will be easily called on the map. The destination icon 27 is associated with a function to set the position after the movement as the destination, and a route to the position set as the destination is searched by the arithmetic and control part 1.

Next, the method for setting the destination is described following FIGS. 3A to 3D.

First, in FIG. 3A, the operator that operates the navigation device touches the screen with two fingers of own hand D in a manner such that the destination icon 27 in the icon area 5 is pinched. Specifically, the two fingers of the operator touch a point A and a point B on the screen. (The point A, the point B, and a straight line E in FIG. 3A are not displayed on the real screen. They are indicated for explanation of the present embodiment.) The touched two points (XA1, YA1) and (XB1, YB1) are detected as a touched position detected position A and a touched position detected position B respectively. If the touched points (XA1, YA1) and (XB1, YB1) are detected in a manner such that the destination icon 27 is pinched, it is determined that the destination icon 27 was selected. Specifically, if it is determined that the touched position detected position A is within a predetermined distance area surrounding the destination icon 27 and the touched position detected position B is located in an opposite side of the touched position detected position A in relation to the destination icon 27 within the predetermined distance area, it is determined that the destination icon 27 was selected. That is, it is determined that the operator pinched the destination icon 27. In the present embodiment, a case is applied, in which a midpoint C of the touched points (XA1, YA1) and (XB1, YB1) is at an approximate center of the destination icon 27. However, the midpoint C of the touched points (XA1, YA1) and (XB1, YB1) may be located at a part of the destination icon 27.

In FIG. 3B, after the destination icon 27 was selected and it has been determined that the operator pinched the destination icon 27, if the operator moved the respective points (XA1, YA1) and (XB1, YB1) in the direction of an arrow 36 keeping a position relation between the touched two points (XA1, YA1) and (XB1, YB1), it is determined that the destination icon 27 is moving. The operator moves the destination icon 27 by moving the two fingers to the certain position on the map 31 in the map display part 34.

Next, in FIG. 3C; if the operator moved the destination icon 27 to the certain position on the map 31 in the map display part 34, rotated the two fingers of the operator in a clockwise direction at the moved position, and moved the two fingers away from the screen 3, the position of the destination icon 27 is settled as the destination. That is, if the touched two points (XA1, YA1) and (XB1, YB1) on the screen 32 were rotated around the midpoint C of the two points (XA1, YA1) and (XB1, YB1) in a predetermined direction, for example, in the clockwise direction, and the touch at the two points was cancelled, the position of the destination icon 27 of when the two fingers moved away the screen is settled as the position of the destination icon 27 targeted by the operator on the map 31 of the map display part 34. And then, the route search is executed using such position as the destination. In the present embodiment, as the route search under priority on toll roads is executed, a message "search under priority on toll roads is executed." is displayed at the lower part of the screen 32. If the touched points of the two fingers are located on approximate opposite sides with respect to the position of the destination icon 27 and movement directions of the respective touched points are opposite directions around the position of the destination icon 27, it is determined that the two fingers selecting (pinching) the destination icon 27 were rotated.

Consequently, the following problem can be solved: while the operator is moving the destination icon 27 to the certain position on the map 31, if the operator unintentionally moves the two fingers away the screen 32, the position of the destination icon 27 at such moment is settled as the destination and the route search is executed.

In FIG. 3D, if the operator rotated the two fingers in a counterclockwise direction and moved the two fingers away the screen 32, the position of the destination icon 27 is settled as the destination. That is, if the two points (XA1, YA1) and (XB1, YB1) touched on the screen 32 were rotated around the midpoint C of the two points (XA1, YA1) and (XB1, YB1) in the predetermined direction, for example, in the counterclockwise direction, and the touch at the two points was stopped, the position of the destination icon 27 of when the two fingers moved away the screen 32 is settled as the position of the destination icon 27 targeted by the operator, and then the route search using such position as the destination is executed, as when the two points were rotated in the direction. However, when executing the route search with such destination, the route search under the priority on general roads is executed, instead of the route search under priority on toll roads, which is the condition of the route search in case of rotating in the clockwise direction. Then, "search under priority on general roads is executed." is displayed at the lower part of the screen 32.

The mis-settlement of the position of the destination is prevented by adding configuration of detecting the rotation centered on the midpoint C of the two points (XA1, YA1) and (XB1, YB1) before the touch at the two points (XA1, YA1) and (XB1, YB1) is stopped. In addition, by adding configuration of changing the condition of the route search, for example, the condition of the priority on toll roads or general roads, according to the rotating direction, a function can be added without increasing the operation of the operator. As a result, the operation volume of the operator can be reduced.

Next, a control method for setting the destination of the navigation device according to the present embodiment, which is processed by the arithmetic and control part 1, is described below.

First, with reference to FIG. 4, a flowchart of the "destination setting routine" of the navigation device according to the present embodiment is described. This flowchart is called during execution of the main program of the navigation device.

First, at Step S11, it is determined whether or not the touch at the two points was detected, that is, whether or not it has been detected that the two fingers of the operator touched the two points on the screen. If YES, the procedure goes to Step S12. If NO, Step S11 is repeated until YES is determined at Step S11. Here, Step S11 is defined as a touch determination unit.

At Step S11, if YES is determined, that is, if it is determined that it has been detected that the two fingers of the operator touched the two points on the screen 32, the procedure goes to Step S12. At Step S12, it is determined whether or not the midpoint C of the touched two points on the screen 32 is on the destination icon 27. If YES, the procedure goes to Step S13. If NO, the procedure goes to Step S19.

At Step S12, if YES is determined, that is, if it is determined that the midpoint C of the touched two points is on the destination icon 27, the procedure goes to Step S13. At Step S13, it is determined that the destination icon 27 between the touched points was selected, that is, it is determined that the operator pinched the destination icon 27, and the procedure goes to Step S14.

On the other hand, at Step S12, if NO is determined, that is, if it is determined that the midpoint C of the touched two points is not on the destination icon 27, the procedure goes to Step S19. It is determined that the operator merely operates a map, and this flowchart is returned.

At Step S13, the destination icon 27 is moved to an arbitrary position on the map 31 by the operator. However, at Step S15, the position of the destination icon 27 is not settled until it is determined that the touched points were rotated. Therefore, at Step S14, it is determined whether or not the touch at the two points was stopped, that is, it is determined whether or not the touch at the two points was unintentionally stopped while moving the destination icon 27 to the arbitrary position on the map 31. If NO, the procedure goes to Step S15. If YES, the procedure returns to Step S11. Step S11 is repeated until YES is determined at Step S11.

At Step S14, if YES is determined, that is, if the touch at the two points was stopped, the procedure returns to Step S11. That is, whether or not the touch at the two points was detected can be determined immediately, and from the position where the touch at the two points was stopped, the destination icon 27 is reselected. At Step S14, even if the touch at the two points was stopped, the position where the touch was stopped is not settled as the destination; therefore, the route search is not executed.

On the other hand, at Step S14, if NO is determined, that is, if the touch at the two points is not stopped, the procedure goes to Step S15. At Step S15, it is determined whether or not the touched points were rotated. If YES, the procedure goes to Step S16. If NO, the procedure goes to Step S20.

The destination icon 27 is moved to the certain position of the map 31 on the screen 32 by the operator. Then, at Step S15, it is determined whether or not the touched points were rotated, that is, whether or not the two points touched by the two fingers of the operator on the screen were rotated around the midpoint C of the touched two points, If YES, the procedure goes to Step S16. If NO, the procedure goes to Step S20.

At Step S15, if YES is determined, that is, if it is determined that the touched two points were rotated around the midpoint C of the touched two points, the procedure goes to Step S16. At Step S16, it is determined whether the rotating direction is clockwise or counterclockwise. If YES (clockwise), the procedure goes to Step S17. If NO (counterclockwise), the procedure goes to Step S22.

On the other hand, at Step S15, if NO is determined, that is, if it is not detected that the touched two points were rotated centering on the midpoint C of the two points, the procedure goes to Step S20. At Step S20, it is determined whether or not the touched points were moved in parallel, that is, it is determined whether or not the touched two points were moved in the same direction keeping a space between the touched two points. If YES, the procedure goes to Step S21. If NO, Step S15 is repeated until YES is determined at Step S15.

If YES was determined at Step S20, that is, if it is determined that the touched two points have been moved in the same direction keeping the space between the touched two points, the procedure goes to Step S21. At Step S21, it is determined that the position of the destination icon 27 is moving on the screen 32, and Step S15 is repeated until YES is determined at Step S15.

At Step S16, if YES is determined, that is, if it is determined that the rotation is clockwise, the procedure goes to Step S17. At Step S17, it is determined whether or not the touch at the two points was stopped. If YES, the procedure goes to Step S18. If NO, the procedure returns to Step S16.

At Step S17, if YES is determined, that is, if it is determined that the touch at the two points was stopped, the procedure goes to Step S18. At Step S18, the position of the destination icon 27 on the screen 32 where the touch was stopped is settled as the destination, and the route search to the destination is executed under the priority on toll roads, and the flowchart is returned.

On the other hand, at Step S16. if NO is determined, that is, if it is determined that the rotation is counterclockwise, the procedure goes to Step S22. It is determined whether or not the touch at the two points was stopped. If YES, the procedure goes to Step S23. If NO, the procedure returns to Step S16.

At Step S22, if YES is determined, that is, if it has been determined that the touch at the two points was stopped, the procedure goes to Step S23. At Step S23, the position of the destination icon 27 on the screen 32 where the touch was stopped is settled as the destination, the route search to the destination is executed under the priority on general roads, and the flowchart is returned.

FIG. 5 shows examples of other embodiments, which are applicable when settling the position of the icon on the map.

FIG. 5(A) shows that: if the two points touched by the operator were rotated in the counterclockwise direction around the midpoint C of the two points, the icon is settled as a waypoint; and if the two points were rotated in the clockwise direction, the icon is settled as the destination. The waypoint here represents a point to stop by on the way to the destination when a route to the destination is searched. Consequently, if the point has been set as the waypoint, a new route to the destination via the waypoint is searched.

Next, FIG. 5(B) shows that: if the two points touched by the operator were rotated in the counterclockwise direction around the midpoint C of the two points, the position where the icon is located is settled as the memory point; and if the two points were rotated in the clockwise direction, the position where the icon is located is settled as the destination.

In addition, FIG. 5(C) shows that further functions are added by detecting a rotation angle in addition to detecting the rotating direction.

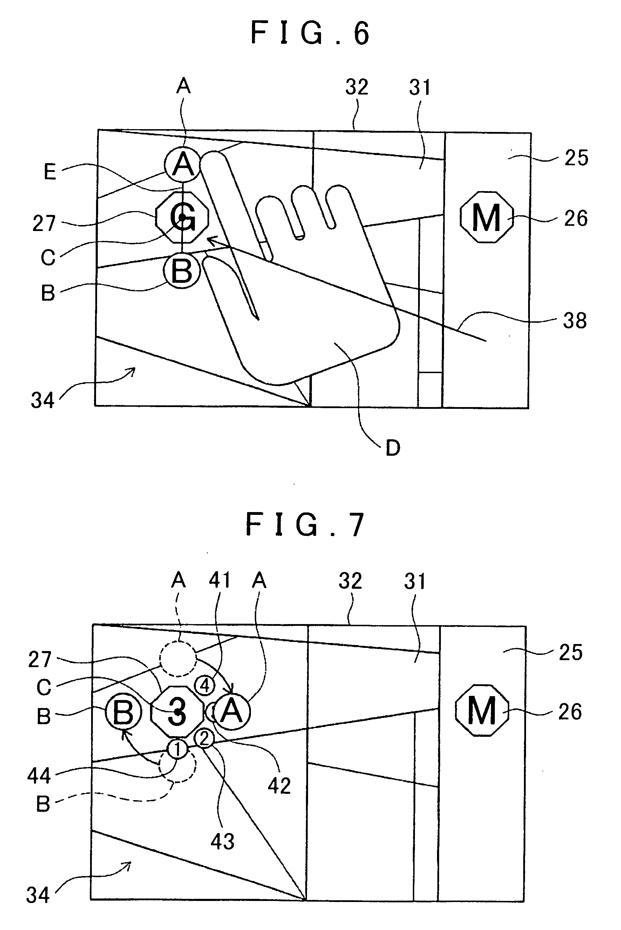

Such embodiment in case of detecting the rotating angle is described with reference to FIGS. 6 and 7. Here, operations from a state where three destination icons 27 are already settled and a route passing through the three destination icons 27 is searched on the map 31 are described.

As shown in FIG. 6, the operator that the navigation device touches the screen with two fingers of the operator's hand D such that the destination icon 27 in the icon area 25 is pinched. Specifically, the two fingers of the operator touch the point A and the point B on the screen. (The point A, the point B, and the straight line E in FIGS. 6 and 7 are not displayed on the real screen. They are indicated for explanation of the present embodiment.)

After the fourth destination icon 27 was selected and it has been determined that the operator pinched the destination icon 27, if the operator moved the two points (XA2, YA2) and (XB2, YB2) in parallel in the direction of an arrow 38 keeping a space between the respective two points (XA2, YA2) and (XB2, YB2), it is determined that the destination icon 27 is moving. The operator moves the fourth destination icon 27 by moving the two fingers to the certain position on the map 31 in the map display part 34.

While the destination icon 27 is pinched, four circles 41, 42, 43, and 44 are displayed in the vicinity of the destination icon 27, and numbers "4", "3", "2", "1" are displayed in number order in the respective circles 41, 42, 43, and 44. The display is not limited to the circles 41, 42, 43, and 44, but may be a square, a triangle, a rhombus, or the like.

The numbers "4", "3", "2", and "1" displayed in the respective circles 41, 42, 43, and 44 represent a passing order that corresponds to the four destination icons 27 including the pinched destination icon 27. Consequently, for example, if four destination icons 27 are already settled and a fifth destination icon 27 is being pinched, five circles are displayed in the vicinity of the fifth destination icon 27 and numbers "5", "4", "3", "2", "1" are displayed in number order in the circles.

If a finger of the operator is placed over any of the circles 41, 42, 43, and 44, the number displayed in the circle where the finger was placed is displayed in place of a letter "G" on the destination icon 27. For example, as shown in FIG. 7, if the finger of the operator is placed over the circle 42 where the number "3" is displayed, the number "3" is displayed in place of the letter "G" on the destination icon 27. Subsequently, if the operator moves the two fingers away from the screen 32, the position of the fourth destination icon 27 is set to the third point to be passed and the destination icon 27 that was set to the third point to be passed is set to the fourth point to be passed.

In addition, for example, if the finger of the operator was placed over the displayed circle 41 where the number "4" is displayed, the number "4"' is displayed in place of the letter "G" on the destination icon 27. Subsequently, if the operator moves the two fingers away the screen 32, the position of the fourth destination icon 27 is set to the fourth point to be passed.

Consequently, the operator moves the destination icon 27 to a certain position and settles the destination by rotating the two fingers in the predetermined direction, for example, in the clockwise direction. At this time, if the operator moves the finger to over the number for the passing order that the operator desires to set among the respective numbers displayed in the vicinity of the destination icon 27, and moves the two fingers away from the screen 32, the operator can change the fixed passing order of the respective destinations including the position of the above moved destination icon 27 and perform route search.

In addition, if the finger of the operator was placed over any of the respective circles 41, 42, 43, and 44 displayed in the vicinity of the destination icon 27, the number displayed in the circle under the finger is displayed in place of the letter "G" on the destination icon 27. This enables the operator to easily confirm the number displayed in the circle under the finger and correctly perform setting operation of the passing order. As a result, the operability is improved.

In FIG. 7, the numbers representing the passing order are displayed in the vicinity of the destination icon 27. However, the present invention is not limited to this embodiment. For example, in place of the respective circles 41, 42, 43, and 44, squares, in which a word "Toll" representing a search condition under priority on toll roads and a word "General" representing a search condition under priority on general roads are displayed, may be displayed. And, if the operator moves the finger to over any of the squares and moved the two fingers away the screen 32, route search may be executed under the search condition displayed in the square. In addition, if the finger of the operator is placed over any of the respective squares, the word displayed in the square may be displayed in place of the letter "G" on the destination icon 27.

While various features have been described in conjunction with the examples outlined above, various alternatives, modifications, variations, and/or improvements of those features and/or examples may be possible. Accordingly, the examples, as set forth above, are intended to be illustrative.

## Claims

1. A navigation device comprising:
a display unit (3) that displays a map (31) and an icon (27);
an icon selection unit that enables a displayed icon to be selected and moved to an arbitrary position on the map;
an icon position settlement unit (92) that settles a position of the icon thus moved; and
a control unit (1) that executes a function associated with the icon based on the position of the icon thus settled, wherein the icon is selected by touching two points on the display unit; **characterized in that**
the icon selection unit selects the icon if it is located within a predetermined area around the midpoint between the two points touched on the display unit, and
the icon position settlement unit settles the position of the icon if the two points selecting the icon have been rotated around the position of the icon.

2. The navigation device according to claim 1, wherein
the icon position settlement unit determines that the two points selecting the icon have been rotated if the two points selecting the icon are located on opposite sides with respect to the position of the icon and the respective points have been moved in opposite directions around the position of the icon.

3. The navigation device according to claim 1 or 2, wherein
the icon is associated with two functions corresponding to rotating directions of the two points selecting the icon, and
the control unit, when executing the function of the icon, executes the function corresponding to the rotating direction of the two points selecting the icon.

4. The navigation device according to claim 3, wherein
the icon is associated with a function for designating a route search condition and performing route search using the position of the icon as a destination, and
the control unit, when executing the route search to the settled position of the icon, sets the route search condition according to the rotating direction of the two points selecting the icon and executes the route search.

5. The navigation device according to claim 1 or 2, wherein
the icon is associated with a plurality of functions corresponding to rotating angles of the two points selecting the icon, and
the control unit, when executing the function of the icon, executes the function corresponding to the rotating angle of the two points selecting the icon.

6. The navigation device according to claim 5, wherein
the icon selection unit displays information of a plurality of functions associated with the icon in the vicinity of the selected icon, if one of the two points selecting an icon is located at a location where information over a desired function among said plurality of functions is displayed when a touch of the two points selecting the icon stops, the control unit executes the desired function.

7. The navigation device according to claim 6, wherein
When one of the two points selecting the icon is located at a location where information over a considered function among said plurality of functions is displayed,
the icon selection unit displays over the icon the information of the considered function.

## Patentansprüche

1. Navigationsgerät umfassend:
eine Anzeigeeinheit (3), die eine Karte (31) und ein Icon (27) anzeigt,
eine Iconauswahleinheit, die es ermöglicht, ein angezeigtes Icon auszuwählen und an eine beliebige Position auf der Karte zu bewegen,
eine Iconpositionsfestsetzungseinheit (92), die eine Position des so bewegten Icons festsetzt, und
eine Steuereinheit (1), die eine mit dem Icon assoziierte Funktion basierend auf der Position des so angesiedelten Icons ausführt, wobei das Icon durch Berühren zweier Punkte auf der Anzeigeeinheit ausgewählt wird, **dadurch gekennzeichnet, daß**
die Iconauswahleinheit das Icon auswählt, wenn es in einer vorbestimmten Region um den Mittelpunkt zwischen den beiden auf der Displayeinheit berührten Punkte angeordnet ist, und
die Iconpositionsfestsetzungseinheit die Position des Icons festsetzt, wenn die beiden Punkte, die das Icon auswählen, um die Position des Icons herum gedreht worden sind.

2. Navigationsgerät nach Anspruch 1, wobei
die Iconpositionsfestsetzungseinheit bestimmt, daß die beiden Punkte, die das Icon auswählen, gedreht worden sind, wenn die beiden Punkte, die das Icon auswählen, auf gegenüberliegenden Seiten in bezug auf die Position des Icons angeordnet sind, und die entsprechenden Punkte in gegenseitige Richtungen um die Position des Icons herum bewegt worden sind.

3. Navigationsgerät nach Anspruch 1 oder 2, wobei
das Icon mit zwei Funktionen assoziiert ist, die Rotationsrichtungen der beiden Punkte, die das Icon auswählen, entsprechen, und
die Steuereinheit, wenn sie die Funktion des Icons ausführt, die Funktion entsprechend der Rotationsrichtung der beiden Punkte, die das Icon auswählen, ausführt.

4. Navigationsgerät nach Anspruch 3, wobei
das Icon mit einer Funktion zum Bezeichnen einer Routensuchbedingung und zum Durchführen der Routensuche unter Verwendung der Position des Icons als ein Zielort assoziiert ist, und
die Steuereinheit, wenn sie die Routensuche zu der angesiedelten Position des Icons ausführt, die Routensuchbedienung gemäß der Rotationsrichtung der beiden Punkte, die das Icon auswählen, einstellt und die Routensuche ausführt.

5. Navigationsgerät nach Anspruch 1 oder 2, wobei
das Icon mit mehreren Funktionen entsprechend Rotationswinkeln der beiden Punkte, die das Icon auswählen, assoziiert ist, und
die Steuereinheit, wenn sie die Funktion des Icons ausführt, die Funktion entsprechend des Rotationswinkels der beiden Punkte, die das Icon auswählen, ausführt.

6. Navigationsgerät nach Anspruch 5, wobei
die Iconauswahleinheit Informationen über mehrere mit den Icon assoziierte Funktionen in der Nachbarschaft des ausgewählten Icons anzeigt, wenn einer der beiden Punkte, die ein Icon auswählen, an einem Ort angeordnet ist, an dem Informationen über eine gewünschte Funktion unter den mehreren Funktionen angezeigt werden, wenn eine Berührung der beiden Punkte, die das Icon auswählen, stoppt, die Steuereinheit die gewünschte Funktion ausführt.

7. Navigationsgerät nach Anspruch 6, wobei
wenn einer der beiden Punkte, die das Icon auswählen, an einem Ort angeordnet ist, an dem Informationen über eine berücksichtigte Funktion unter den mehreren Funktionen angezeigt werden,
die Iconauswahleinheit über dem Icon Informationen der berücksichtigten Funktion anzeigt.

## Revendications

1. Dispositif de navigation comprenant :
une unité d'affichage (3) qui affiche une carte (31) et une icône (27) ;
une unité de sélection d'icône qui permet qu'une icône affichée soit sélectionnée et déplacée à une position arbitraire sur la carte ;
une unité d'établissement de position d'icône (92) qui établit une position de l'icône ainsi déplacée ; et
une unité de commande (1) qui exécute une fonction associée à l'icône sur la base de la position de l'icône ainsi établie, dans lequel l'icône est sélectionnée en touchant deux points sur l'unité d'affichage ; **caractérisé en ce que**
l'unité de sélection d'icône sélectionne l'icône si elle est située dans une zone prédéterminée autour du point central entre les deux points touchés sur l'unité d'affichage, et
l'unité d'établissement de position d'icône établit la position de l'icône si les deux points sélectionnant l'icône ont été tournés autour de la position de l'icône.

2. Dispositif de navigation selon la revendication 1, dans lequel
l'unité d'établissement de position d'icône détermine que les deux points sélectionnant l'icône ont été tournés si les deux points sélectionnant l'icône sont situés sur des côtés opposés par rapport à la position de l'icône et si les points respectifs ont été déplacés dans des directions opposées autour de la position de l'icône.

3. Dispositif de navigation selon la revendication 1 ou 2, dans lequel
l'icône est associée à deux fonctions correspondant aux directions de rotation des deux points sélectionnant l'icône, et
l'unité de commande, lors de l'exécution de la fonction de l'icône, exécute la fonction correspondant à la direction de rotation des deux points sélectionnant l'icône.

4. Dispositif de navigation selon la revendication 3, dans lequel
l'icône est associée à une fonction pour désigner une condition de recherche d'itinéraire et effectuer une recherche d'itinéraire en utilisant la position de l'icône en tant que destination, et
l'unité de commande, lors de l'exécution de la recherche d'itinéraire vers la position établie de l'icône, détermine la condition de recherche d'itinéraire en fonction de la direction de rotation des deux points sélectionnant l'icône et exécute la recherche d'itinéraire.

5. Dispositif de navigation selon la revendication 1 ou 2, dans lequel
l'icône est associée à une pluralité de fonctions correspondant aux angles de rotation des deux points sélectionnant l'icône, et
l'unité de commande, lors de l'exécution de la fonction de l'icône, exécute la fonction correspondant à l'angle de rotation des deux points sélectionnant l'icône.

6. Dispositif de navigation selon la revendication 5, dans lequel
l'unité de sélection d'icône affiche les informations d'une pluralité de fonctions associées à l'icône dans le voisinage de l'icône sélectionnée ; si l'un des deux points sélectionnant une icône est situé à un emplacement où des informations sur une fonction souhaitée parmi ladite pluralité de fonctions sont affichées lorsqu'un contact avec les deux points sélectionnant l'icône cesse, l'unité de commande exécute la fonction souhaitée.

7. Dispositif de navigation selon la revendication 6, dans lequel
lorsque l'un des deux points sélectionnant l'icône est situé à un emplacement où des informations sur une fonction considérée parmi ladite pluralité de fonctions sont affichées,
l'unité de sélection d'icône affiche sur l'icône les informations de la fonction considérée.
